# EUROPÄISCHE PATENTANMELDUNG

(11) **EP 2 674 283 A2**
(43) Veröffentlichungstag der Anmeldung: **18.12.2013**
(21) Anmeldenummer: 13176330.2
(22) Anmeldetag: 19.08.2010
(51) Int. Cl.: B29C 67/00, B22F 3/105

(54) **Vorrichtung zur Herstellung von Formkörpern durch schichtweises Aufbauen aus Werkstoffpulver**

(30) Priorität: 20.08.2009 DE 102009038165; 02.12.2009 DE 202009016400 U
(62) Teilanmeldung aus: 10173397.0
(71) Anmelder: Fockele, Matthias, 33178 Borchen (DE)
(72) Erfinder: Fockele, Matthias, 33178 Borchen (DE)
(74) Vertreter: Tiesmeyer, Johannes

(57) **Zusammenfassung**

Vorgeschlagen wird eine Vorrichtung zum Herstellen von Formkörpern (23) durch schichtweises Aufbauen aus Werkstoffpulver durch ortsselektives Verfestigen des Pulvers zu zusammenhängenden Bereichen nach Maßgabe von Geometriebeschreibungsdaten des Formkörpers (23), umfassend einen Prozessraum (9) mit einem Prozessraumboden (11), der eine Basisebene (51) und eine relativ dazu mittels einer steuerbaren Antriebseinheit längs einer vertikalen Bauplattformachse (35) gesteuert höhenverstellbare Bauplattform (13) für den Formkörper (23) aufweist, eine Pulverschichtenpräparierungseinrichtung zum Präparieren einer jeweiligen nachfolgend ortsselektiv zu verfestigenden Pulverschicht (21) auf der Bauplattform (13), eine Pulververfestigungseinrichtung, die zum ortsselektiven Verfestigen von Pulver der jeweils zuletzt auf der Bauplattform (13) präparierten Pulverschicht (21) aktivierbar ist, und eine Pulverabsaugeinrichtung (69, 71) zum Absaugen von überschüssigem Pulver von der Bauplattform (13) nach Fertigstellen eines betreffenden Formkörpers (23), wobei die Pulverschichtenpräparierungseinrichtung (41) eine Pulverversorgungseinrichtung (55, 57, 59, 63) zum Bereitstellen von Pulver in dem Prozessraum (9) und einen Glättungsschieber (43) mit wenigstens einer Pulverglättungsleiste (47) zum Verteilen und Glätten des von der Pulverversorgungseinrichtung im Prozessraum (9) bereitgestellten Pulvers auf der Bauplattform (13) aufweist, wobei der Glättungsschieber (43) mit seiner wenigstens einen Pulverglättungsleiste (47) zwischen zwei Umkehrstellen mit in Draufsicht dazwischenliegender Bauplattform (13) im Prozessraum (9) hin- und herbewegbar ist, um die wenigstens eine Pulverglättungsleiste (47) in einem der gewünschten Pulverschichtdicke entsprechenden Abstand zu der im jeweils vorausgegangenen Schritt auf der Bauplattform (13) ortsselektiv verfestigten Pulverschicht über die Bauplattform (13) hinwegzubewegen, wobei die Pulverabsaugeinrichtung (69, 71) eine Absaugglocke (69) umfasst, die im Prozessraum (9) über die Bauplattform (13) stülpbar ist und die über Pulverabsaugleitungen (71) mit einem externen Sammelbehälter verbunden ist.

## Beschreibung

Die Erfindung betrifft eine Vorrichtung zur Herstellung von Formkörpern durch schichtweises Aufbauen aus Werkstoffpulver durch ortsselektives Verfestigen des Pulvers zu zusammenhängenden Bereichen nach Maßgabe von Geometriebeschreibungsdaten des Formkörpers, umfassend
- einen Prozessraum mit einem Prozessraumboden, der eine Basisebene und eine relativ dazu mittels einer steuerbaren Antriebseinheit längs einer vertikalen Bauplattformachse gesteuert höhenverstellbare Bauplattform für den Formkörper aufweist,
- eine Pulverschichtenpräparierungseinrichtung zur Präparierung einer jeweiligen nachfolgend ortsselektiv zu verfestigenden Pulverschicht auf der Bauplattform und
- eine Pulververfestigungseinrichtung, die zum ortsselektiven Verfestigen von Pulver der jeweils zuletzt auf der Bauplattform präparierten Pulverschicht aktivierbar ist,
wobei die Pulverschichtenpräparierungseinrichtung eine Pulverversorgungseinrichtung zur Bereitstellung von Pulver in dem Prozessraum und einen Glättungsschieber mit wenigstens einer Pulverglättungsleiste zur Verteilung und Glättung des von der Pulverversorgungseinrichtung im Prozessraum bereitgestellten Pulvers auf der Bauplattform aufweist, wobei der Glättungsschieber mit seiner wenigstens einen Pulverglättungsleiste zwischen zwei Umkehrstellen mit in Draufsicht dazwischenliegender Bauplattform im Prozessraum hin- und herbewegbar ist, um die wenigstens eine Pulverglättungsleiste in einem der gewünschten Pulverschichtdicke entsprechenden Abstand zu der im jeweils vorausgegangenen Schritt auf der Bauplattform ortsselektiv verfestigten Pulverschicht über die Bauplattform hinwegzubewegen.

Derartige Vorrichtungen zur Herstellung von Formkörpern sind in diversen Ausgestaltungen bekannt. Grundsätzliche Unterschiede bekannterVorrichtungen dieser Art ergeben sich aus der Wirkungsweise der Pulververfestigungseinrichtung. So gibt es Vorrichtungen, bei denen die Pulververfestigung durch ortsselektives-Aufbringen eines Bindemittels oder chemischen Reaktants auf die jeweils zuletzt auf der Bauplattform präparierte Pulverschicht erfolgt, um diese an den betreffenden Stellen zu zusammenhängenden Bereichen zu verfestigen, die sich mit entsprechend verfestigten Bereichen an der jeweils darunter liegenden Schicht verbinden.

Als besonders interessant hat sich jedoch in den letzten Jahren ein anderes Arbeitsprinzip beim ortsselektiven Verfestigen von Pulver herausgestellt, nämlich das Verfestigen durch Umschmelzen oder ggf. durch Sintern des Pulvers durch Energieeintrag durch Strahlung, insbesondere Laserstrahlung. Die Arbeitsweise des Umschmelzens des Pulvers wird in der vorliegenden Anmeldung als selektives Laserschmelzen bezeichnet. Das selektive Laserschmelzen wird eingesetzt, um Formkörper aus metallischen Pulvern oder/ und keramischen Pulvern herzustellen. Die dazu verwendeten Vorrichtungen werden auch als SLM-Vorrichtungen bezeichnet und sind in diversen Varianten bekannt, so z. B. aus der DE 10 2004 041 633 A1, der DE 102 36 907 A1, der DE 199 05 067 A1, der DE 10 112 591 A1 oder der WO98/ 24574 A1. Diese SLM-Vorrichtungen werden benutzt, um einen Formkörper entsprechend Geometriedaten, insbesondere CAD-Daten, des Formkörpers durch schichtweises Aufbauen aus pulverförmigem, metallischem oder keramischem Werkstoff herzustellen, wobei nacheinander mehrere Pulverschichten übereinander aufgebracht werden und jede Pulverschicht vor dem Aufbringen der nächstfolgenden Pulverschicht mit einem fokussierten Laserstrahl in einem vorgegebenen Bereich, der einem ausgewählten Querschnittsbereich des Formkörpers entspricht, erhitzt wird. Der Laserstrahl wird dabei jeweils entsprechend den CAD-Querschnittsdaten des ausgewählten Querschnittsbereichs des Formkörpers oder daraus abgeleiteter Daten über die jeweilige Pulverschicht geführt. Durch den Energieeintrag der Laserstrahlung wird das Werkstoffpulver im Bereich der Auftreffstelle des Laserstrahls ortsselektiv umgeschmolzen, so dass zusammenhängende Bereiche möglichst homogen umgeschmolzenen Materials in der jeweiligen Schicht entstehen. Übereinander liegende umgeschmolzene Bereiche zweier aufeinander folgender Schichten verbinden sich, so dass der Formkörper Schicht für Schicht zusammenhängend entsteht.

Die Qualität der Präparation der auf der Bauplattform aufeinander folgenden Pulverschichten im Sinne des Einhaltens einer jeweiligen vorbestimmten Schichtdicke und des Schaffens einer jeweiligen ebenen Pulverschichtoberfläche spielt eine Rolle beim selektiven Laserschmelzen, da sie die Homogenität des aus dem Pulver erschmolzenen und wiedererstarrten Materials des Formkörpers bestimmt. Dies gilt sowohl für die Herstellung eines Formkörpers nach dem Prinzip des selektiven Laserschmelzens als auch bei der Herstellung eines Formkörpers nach dem Prinzip des selektiven Lasersinterns, bei dem das Pulvermaterial nicht vollständig durchgeschmolzen, sondern an den bestrahlten Stellen gesintert wird. Dabei kommen üblicherweise Mehrkomponenten-Pulvermaterialien zum Einsatz, die unterschiedliche Schmelzpunkte aufweisen.

Die Präparation einer jeweils neuen Pulverschicht auf der Bauplattform sollte in jedem Fall ungeachtet des zum Einsatz kommenden Pulververfestigungsprinzips möglichst wenig Zeit beanspruchen, damit der Bauprozess des Formkörpers insgesamt möglichst schnell erfolgen kann. Um diesen Anforderungen zu genügen, nämlich dem raschen Herstellen einer homogenen ebenen Pulverschicht der gewünschten Pulverschichtdicke, sind verschiedene Schichtenpräparierungseinrichtungen vorgeschlagen worden.

Bei der Vorrichtung gemäß der DE 102 36 907 A1 weist die Schichtenpräparierungseinrichtung einen Pulverspender in Form eines Patronengehäuses mit einer Kammer zur Aufnahme einer Vorratsmenge an Pulver auf. Der Pulverspender ist mitbewegter Teil eines Glättungsschiebers und hat an seiner Unterseite einen durchgehenden Pulverausgabespalt und zwei Pulverglättungsleisten aus Silikon oder dgl. Die Pulverglättungsleisten verlaufen parallel zueinander und bilden eine gemeinsame unterste Ebene der Schichtenpräparierungseinrichtung. Der Pulverausgabespalt verläuft zwischen den beiden Glättungsschiebern. Zur Präparierung einer Pulverschicht wird zunächst der Abstand zwischen den unteren Flächen der beiden Glättungsschieber zu der zuletzt bearbeiteten Schicht auf das Maß der gewünschten herzustellenden Pulverschichtdicke eingestellt. Dann wird die Schichtenpräparierungseinrichtung unter Einhaltung dieses Abstandsmaßes über die Bauplattform und somit über die zuletzt bearbeitete Schicht hinwegbewegt. Dabei wird aus dem mitbewegten Pulverspender durch den unteren Abgabespalt hindurch Pulver ausgegeben und mittels der Glättungsschieberleiste verteilt und eingeebnet. Die pro Schicht bereitgestellte Pulvermenge wird durch eine im Pulverspender mitgeführte Dosierwelle jeweils vorgegeben.

Bei der Weiterentwicklung der hier insbesondere betrachteten Technologie des selektiven Laserschmelzens (SLM) und der Ausdehnung des Verfahrens auf die Verwendung einer Vielzahl unterschiedlicher Pulvermaterialien, wie z. B. Gold, Aluminium, Titan, Kobalt-Chrom usw., hat es sich gezeigt, dass die Pulvermaterialien z. B. höchst unterschiedlich fließfähig oder rieselungsfähig sind und dass insbesondere in Bezug auf die Fließeigenschaften einiger Pulvermaterialien noch Optimierungsbedarf bei den Mitteln zur Schichtenpräparierung besteht. Einige Pulver haben sich als sehr gut fließfähig gezeigt, so dass bei Schichtenpräparierungseinrichtungen ohne Einzeidosierungsmittel gelegentlich zu große Mengen solcher Pulver bei jedem Schichtenpräparierungsschritt ausgegeben wurden. Andere Pulvermaterialien zeigten demgegenüber eine Tendenz zur Verklumpung im Pulverspendergehäuse, so dass über den bekannten Ausgabespalt solcher Schichtenpräparierungseinrichtungen kein gleichmäßiger Pulverstrom ausgegeben werden konnte. Dies hat die Qualität der präparierten Schichten beeinträchtigt.

Es sind im Stand der Technik auch Lösungen vorgeschlagen worden, bei denen ein größerer Vorrat an Werkstoffpulver auf einem Hubkolben in einem Zylinderloch des Prozessraumbodens für den Bauprozess eines Formkörpers deponiert wird, wobei der Hubkolben jeweils synchron mit der Absenkbewegung der Bauplattform nach der ortsselektiven Verfestigung der jeweils vorausgegangenen Pulverschicht um ein entsprechendes Maß angehoben wird, um eine kleine Pulvermenge über das Höhenniveau der Basisebene des Prozessraumbodens zu heben, wobei diese Pulvermenge dann von einem Glättungsschieber zur Bauplattform geschoben und dort zu einer gleichmäßigen Schicht verteilt wird. Dieses Prinzip der Pulverzuführung durch einen mit der Absenkbewegung der Bauplattform korrespondierenden Kolbenhub im Pulvervorratszylinder hat sich als wenig flexibel in Bezug auf etwaig gewünschte Variationen der jeweils zugeführten Pulvermenge pro Pulverpräparationsschritt und hinsichtlich der zeitlichen Optimierung erwiesen. Weiterhin ermöglicht die üblicherweise relativ große Pulverauflagefläche des Hubkolbens eine Fehlzuführung von Pulver zur Bauplattform und unterstützt dadurch eine unkontrollierte Verschmutzung des Prozessraums.

Der vorliegenden Erfindung liegt die Aufgabe zugrunde, bei einer solchen Vorrichtung Mittel für ein möglichst sauberes Pulver-Handling im Prozessraum vorzuschlagen.

Eine Vorrichtung der hier betrachteten Art kann mit einer Schichtenpräparierungseinrichtung bereitgestellt sein, welche zur Präparierung von Schichten aus Pulvermaterialien unterschiedlicher Fließfähigkeiten mit gutem Ergebnis betreffend die Qualität der jeweiligen Schichten verwendbar ist, einen einfachen Aufbau hat und eine rasche Durchführung der jeweiligen Schichtenpräparation unter Vermeidung des Anfalls nennenswerter Mengen überschüssigen Pulvers ermöglicht.

Es sollte wenig überschüssiges Pulver bei jedem Bauprozess anfallen. Innerhalb des Prozessraumes sollte das Pulver möglichst auf einen relativ kleinen, die Bauplattform einschließenden Bereich konzentriert bleiben, damit eine unnötige Verunreinigung des Prozessraums vermieden wird.

Insbesondere kann eine Vorrichtung der hier betrachteten Art eine verbesserte Handhabung des Werkstoffpulvers im Prozessraum während des Bauprozesses ermöglichen.

Bei einer Vorrichtung der eingangs genannten Art ist ferner eine Pulverabsaugeinrichtung zur Absaugung von überschüssigem Pulver von der Bauplattform nach Fertigstellung eines betreffenden Formkörpers vorgesehen.

Diese Aufgabe wird erfindungsgemäß dadurch gelöst, dass die Pulverabsaugeinrichtung eine im Prozessraum über eine Bauplattform stülpbare Absaugglocke umfasst.

Die Absaugglocke kann über Absaugleitungen mit einem externen Sammelbehälter verbunden sein. Zum Absaugen wird eine Pumpe aktiviert, welche die erforderlichen Druckverhältnisse in der Saugglocke erzeugt und das Pulver über die Absaugleitungen absaugt. Dies kann bedarfsweise in Schutzgasatmosphäre erfolgen. Das Innenvolumen der Saugglocke kann im Vergleich mit dem Innenvolumen des Prozessraumes normalerweise klein gehalten werden.

Vorzugsweise ist die Bauplattform bei darübergestülpter Absaugglocke zumindest näherungsweise auf die Basisebene des Prozessraumbodens oder darüber hinaus anhebbar, insbesondere während eines Pulverabsaugvorganges, um so einen betreffenden Formkörper in die Absaugglocke einzubringen und ihn von Überschusspulver zu befreien.

Es kann eine Pulverauflockerungseinrichtung vorgesehen sein, um das abzusaugende Pulver auf der Bauplattform aufzulockern. Die Pulverauflockerungseinrichtung kann z. B. eine die Bauplattform in Vibration versetzende Rütteleinrichtung, insbesondere Ultraschall-Rütteleinrichtung sein.

Nach Beendigung eines Absaugvorgangs sollte der hergestellte Formkörper von überschüssigem Pulver an seiner Außenseite weitestgehend befreit sein. Die Absaugglocke kann dann wieder gelüftet oder ggf. mit Schutzgas befüllt werden, um einen Druckausgleich mit der Umgebung im Prozessraum herzustellen. Die Handhabung der Absaugglocke kann manuell z. B. unter Verwendung eines einen Durchgriff durch eine Prozessraumgehäusewandöffnung gestattenden Dichthandschuhs erfolgen. Alternativ kann die Handhabung der Absaugglocke auch automatisch, z. B. mittels einer Robotereinrichtung oder dgl. erfolgen.

Zusätzlich oder alternativ kann eine Gas unter Druck in die Saugglocke einleitende Düse oder dgl. vorgesehen sein, mittels welcher das Pulver durch einen Aufblaseffekt aufgelockert werden kann. Bei diesem Gas kann es sich z. B. um ein Schutzgas, wie z. B. Argon, handeln. So kann gemäß einer Ausführungsform der Erfindung das zur Auflockerung des Pulvers eingeblasene Gas mit dem Pulver abgesaugt und nach Filterung und Trennung vom Pulver wieder in die Saugglocke eingeblasen werden, so dass insoweit ein Gasförderkreislauf bei der Pulverabsaugung aufrechterhalten wird.

Der vorstehend angesprochene Aspekt des Pulverauflockerns und -absaugens in einem Gaskreislauf, insbesondere Schutzgaskreislauf, kann noch dahingehend verallgemeinert werden, dass dies nicht unbedingt unter einer gesonderten Absaugglocke oder dgl. zu erfolgen hat, sondern ggf. auch im Prozessraum per se möglich sein kann. Hierzu kann es vorgesehen sein, dass die an einer in den Prozessraum hineinführenden Gaszuführleitung vorgesehene Düse oder dgl. in dem Prozessraum bewegbar ist, um sie gezielt auf aufzulockernde und abzusaugende Pulverbereiche richten zu können. Alternativ oder zusätzlich kann es auch vorgesehen sein, dass die Bauplattform z. B. um ihre vertikale Achse drehbar ist, um die Gaseinlassdüse und betreffende Pulverbereiche auf der Bauplattform in eine gewünschte Position zueinander zu bringen. Insbesondere im Falle einer derart bewegbaren Bauplattform kann es auch vorgesehen sein, dass die genannte Düse im Prozessraum fixiert ist.

Zum Absaugen kann ein bewegbarer Saugrüssel oder dgl. vorgesehen sein, der in entsprechender Weise mit seiner Ansaugöffnung relativ zu der Bauplattform und des davon abzusaugenden Pulvers positionierbar ist. In entsprechender Weise kann die Gaseinlassleitung als bewegbarer Blasrüssel oder dgl. vorgesehen sein. Saugrüssel und/oder Blasrüssel können z. B. mittels eines einen Durchgriff durch Prozessraumgehäusewandöffnungen gestattenden Dichthandschuhpaares innerhalb des Prozessraumes bewegt werden. Die Geometrien der Gaseinlassleitungen und Düsen und der Gasabsaugleitungen mit ihren Gasabsaugöffnungen können in vielfältiger Art und Weise nach Zweckmäßigkeitsgesichtspunkten ausgewählt werden. Dies kann dem Fachmann überlassen bleiben.

Insbesondere für hoch reaktive bzw. chemisch empfindliche Pulver, wie z. B. Titanpulver, wird vorgeschlagen, dass das Auflockern und das Absaugen des aus dem Prozessraum zu entfernenden Pulvers in einem Schutzgaskreislauf, z. B. Argon-Kreislauf, stattfindet, indem ein Filtersystem das Pulver in Schutzgasatmosphäre ausfiltert und ggf. nach Siebung einem Auffangbehälter zuführt, in dem es gegenüber der Luftatmosphäre geschützt ist.

Eine Vorrichtung der hier betrachteten Art kann mit einer Pulverversorgungseinrichtung ausgestattet sein, die einen an einem außerhalb des Prozessraumes vorgesehenen Pulvervorratsbehälter angeschlossenen bzw. anschließbaren Pulverzuführungskanal und einen Förderer zum Fördern von Pulver in dem Pulverzuführungskanal, insbesondere während der Phasen, in denen die Pulververfestigungseinrichtung zur ortsselektiven Verfestigung von Pulver der jeweils zuletzt auf der Bauplattform präparierten Pulverschicht aktiviert ist, aufweist, wobei der Pulverzuführungskanal an wenigstens einer zwischen der Bauplattform und einer der Umkehrstellen der wenigstens einen Pulverglättungsleiste liegenden Pulvereinlassstelle in den Prozessraum einmündet, um Pulver unmittelbar zu dem Prozessraumboden zu leiten, und die wenigstens eine Pulverglättungsleiste bei ihrer Bewegung zwischen den Umkehrstellen , das heißt, auf dem Weg von einer Umkehrstelle zu einer anderen und ggf. an jeder der Umkehrstellen, relativ zu dem Prozessraumboden gesteuert höhenverstellbar ist.

Der Pulverzuführungskanal leitet das von dem Förderer geförderte Pulver unmittelbar zu dem Prozessraumboden. Ein Pulverspender als mitbewegter Bestandteil des Glättungsschiebers, wie etwa aus der DE 102 36 907 A1 bekannt, ist bei der vorliegend offenbarten Vorrichtung nicht erforderlich. Dies hat den Vorteil, dass der Glättungsschieber eine erheblich geringere Masse und somit eine erheblich geringere Trägheit aufweist, so dass er mit einem vergleichsweise schwachen Bewegungsantrieb rasch über die Bauplattform hinweg verfahren werden kann, um eine neue Pulverschicht zu präparieren. Der zeitlichen Optimierung kommt auch zugute, dass die Pulverzufuhr zum Prozessraumboden in den Phasen stattfinden kann, in denen die Pulververfestigungseinrichtung zur ortsselektiven Verfestigung der jeweils zuletzt auf der Bauplattform präparierten Pulverschicht aktiviert ist. Unmittelbar nach Abschluss des Pulververfestigungsschrittes oder ggf. sogar etwas eher kann der Glättungsschieber bereits in Bewegung gesetzt werden, um das ja schon vor der wenigstens einen Pulverglättungsleiste bereitliegende Pulver über die zwischenzeitlich um das Maß der gewünschten Pulverschichtdicke abgesenkte Bauplattform zu verteilen. Die Zwangsförderung des Pulvers durch den Pulverzuführungskanal bietet einen störungsfreien Nachschub der jeweils gewünschten Pulvermenge für den aktuellen Schichtenpräparierungsschritt, und zwar im Wesentlichen ungeachtet der Art und der Fließfähigkeit des verwendeten Pulvers.

Durch die Möglichkeit des Anhebens und des Absenkens der wenigstens einen Pulverglättungsleiste kann der Prozessraumbodenbereich, auf dem Pulver aufgebracht wird, sehr klein und gut abgegrenzt gehalten werden. Dabei ist dafür Sorge zu tragen, dass die wenigstens eine Pulverglättungsleiste beim Überstreichen der Bauplattform so nah an die Basisebene des Prozessraumbodens herangeführt ist, dass auf der Bauplattform die Pulverschicht mit der gewünschten Pulverschichtdicke erzeugt wird. In der Praxis wird die Unterseite der wenigstens einen Pulverglättungsleiste beim Überstreichen der Bauplattform in der Basisebene des Prozessraumbodens liegen, wobei die Bauplattform demgegenüber entsprechend abgesenkt ist. Die wenigstens eine Pulverglättungsleiste wird jedoch auch nach Passieren der Bauplattform eine jeweilige Restmenge an Pulver vor sich herschieben. Um zu vermeiden, dass diese Restmenge an Pulver aus dem näheren Umgebungsbereich der Bauplattform heraustransportiert wird, kann nun die wenigstens eine Pulverglättungsleiste gegenüber der Basisebene des Prozessraumbodens angehoben werden und im angehobenen Zustand weiter in Richtung auf die nächstkommende Umkehrstelle zu bewegt werden. Dabei wird die zunächst über die Bauplattform hinaus verschobene Pulverrestmenge von der wenigstens einen Pulverglättungsleiste sozusagen übersprungen. Vor der nächsten Rückkehrbewegung der wenigstens einen Pulverglättungsleiste in Richtung auf die Bauplattform kann die wenigstens eine Pulverglättungsleiste rechtzeitig wieder abgesenkt werden, damit sie die genannte Menge an Restpulver wieder in Richtung zur Bauplattform mitnehmen kann. Die vertikale Bewegung und die horizontale Bewegung der Pulverglättungsleiste können einander überlagert sein. Alternativ kann es vorgesehen sein, dass Vertikalbewegungen der Pulverglättungsleiste bei Stopps der Horizontalbewegungen stattfinden.

Jeweils eine neue Pulvermenge für die Schichtenpräparierung wird von der Pulverversorgungseinrichtung stets in einem Bereich des Prozessraumbodens zwischen den beiden Umkehrstellen der Pulverglättungsleiste nachgeliefert.

Dabei kann die jeweils nachgelieferte Menge für die Präparierung einer einzigen Pulverschicht bemessen sein oder ggf. auch für die Präparierung mehrerer Pulverschichten dosiert sein.

Das jeweilige Nachliefern von Pulver im Prozessraum kann z. B. während der Phasen erfolgen, in denen die Pulververfestigungseinrichtung zum ortsselektiven Verfestigen von Pulver der zuletzt auf der Bauplattform präparierten Pulverschicht aktiviert ist.

Der Pulverzuführungskanal mündet an einer zwischen der Bauplattform und einer der Umkehrstellen der wenigstens einen Pulverglättungsleiste liegenden Pulvereinlassstelle, vorteilhafterweise von unten her in den Prozessraumboden. Der Förderer drückt somit die jeweils gewünschte Pulvermenge von unten her in den Prozessraum. Der daraufhin in Bewegung versetzte Glättungsschieber nimmt das Pulver dann mittels der wenigstens einen Pulverglättungsleiste zur Bauplattform mit, um es dort in einer gleichmäßigen Schicht der gewünschten Dicke abzulegen. Eine Pulverzufuhr von unten her in den Prozessraumboden ermöglicht im Unterschied zu anderen Pulverzufuhrarten eine kanalisierte und Prozessraumverschmutzung verhindernde Zuführung, da das Pulver zu keinem Zeitpunkt fallen oder rieseln kann.

Es können an verschiedenen Stellen im Prozessraumboden Pulvereinlassstellen vorgesehen sein, z. B. beiderseits der Bauplattform.

Die wenigstens eine Pulverglättungsleiste ist vorzugsweise so höhenverstellbar, dass sie bei Bewegungen, das heißt, auf dem Weg über die Pulvereinlassstelle hinweg wechselweise von der Basisebene des Prozessraumbodens abgehoben oder der Basisebene des Prozessraumbodens dicht angenähert ist. In der Praxis wird die wenigstens eine Pulverglättungsleiste in dem dicht angenäherten Zustand die Basisebene des Prozessraumbodens berühren. Die wenigstens eine Pulverglättungsleiste ist dann abzusenken, wenn sie bei der Bewegung in Richtung auf die Bauplattform Pulver von der Pulvereinlassstelle her mitnehmen soll. Bei der Rückkehrbewegung sollte die wenigstens eine Pulverglättungsleiste dann beim Überstreichen der Pulvereinlassstelle angehoben sein, damit sie kein Pulver in Richtung weg von der Bauplattform verschieben kann.

Vorzugsweise hat der Glättungsschieber einen zwischen den Umkehrstellen bewegbar geführten Arm, an dem die wenigstens eine Pulverglättungsleiste höhenverstellbar angeordnet ist. Die wenigstens eine Pulverglättungsleiste umfasst vorzugsweise ein elastisch nachgiebiges Pulverabstreifelement aus einem gummiartigen oder silikonartigen Material. Das Pulverabstreifelement weist in seinem Querschnitt vorzugsweise die Form eines Drei-, Vier- oder Vielecks auf und ist vorzugsweise in seiner Längsrichtung in seiner Orientierung umkehrbar oder/und in seiner Umfangsrichtung verdrehbar an der Pulverglättungsleiste gehalten und einsetzbar, wodurch die Nutzungsdauer des

Pulverabstreifelements erhöht werden kann.

Ferner kann ein pneumatischer oder/und elektromagnetischer oder/und hydraulischer Stellantrieb für die gesteuerte Höhenverstellung der wenigstens einen Pulverglättungsleiste vorgesehen sein. Im Falle eines pneumatischen Stellantriebs kann dieser z.B. mit Schutzgas als Arbeitsgas betrieben werden, wobei es sich um das ohnehin zur Herstellung einer Arbeitsatmosphäre im Prozessraum zu verwendende Schutzgas handeln kann. Der Stellantrieb sollte steuerbar sein, wobei nicht unbedingt eine besonders anspruchsvolle Steuerung vorgesehen sein muss, da der Glättungsschieber mit zwei diskreten Höheneinstellungen, nämlich einer abgesenkten und einer angehobenen, grundsätzlich auskommen kann.

Jedenfalls sollte der Glättungsschieber mittels einer Steuereinrichtung derart steuerbar sein, dass die wenigstens eine Pulverglättungsleiste bei den Bewegungen zwischen den Umkehrstellen ein vorbestimmtes Bewegungsprofil der Höhenverstellbewegung aufweist. Dabei kann die Höhenverstellung mit der Translationsbewegung der wenigstens eine Pulverglättungsleiste simultan einhergehen. Alternativ kann die Translationsbewegung auch unterbrochen werden, um die wenigstens eine Pulverglättungsleiste anzuheben bzw. abzusenken.

Des Weiteren kann ein mechanischer Stellantrieb vorgesehen sein, welcher die Höhenverstellung der wenigstens einen Pulverglättungsleiste vom Bewegungsantrieb für die Translationsbewegung zwischen den Umkehrstellen ableitet. Ein solcher mechanischer Stellantrieb kann Steuerkurven umfassen.

Der Glättungsschieber kann eine weitere Pulverglättungsleiste aufweisen, die in horizontalem Abstand zu der ersten Pulverglättungsleiste verläuft, so dass die Pulverglättungsleisten einen zum Prozessraumboden offenen Zwischenraum begrenzen, wobei der Glättungsschieber mit seinen Pulverglättungsleisten in eine Pulvernachfüllwartestellung neben der Bauplattform so positionierbar ist, dass die Pulvereinlassstelle in den Zwischenraum einmündet. Die Pulvereinlassstelle ist vorzugsweise im Prozessraumboden vorgesehen, um das Pulver von unten her in den Prozessraum und insbesondere in den Zwischenraum zwischen den Pulverglättungsleisten einzubringen. Es ist jedoch auch eine andere Art von Pulvereinlass denkbar, insbesondere eine Einmündung oberhalb des Prozessraumbodens in den Zwischenraum. Bei der Hin- und Herbewegung des Glättungsschiebers verbleibt überschüssiges, nicht auf der Bauplattform abgelegtes Pulver zumindest größtenteils in dem Zwischenraum zwischen den Pulverglättungsleisten und ist somit daran gehindert, den Prozessraum unkontrolliert zu verschmutzen.

Vorzugsweise ist auch die weitere Pulverglättungsleiste bei ihrer Bewegung zwischen den Umkehrstellen relativ zu dem Prozessraumboden gesteuert höhenverstellbar.

Die beiden Pulverglättungsleisten können unabhängig voneinander höhenverstellbar sein.

Vorzugsweise ist der Glättungsschieber mittels einer Steuereinrichtung derart steuerbar, dass die Pulverglättungsleisten bei den Bewegungen zwischen den Umkehrstellen wechselweise angehoben oder abgesenkt sind, wobei die jeweilige in Bewegungsrichtung vorlaufende Pulverglättungsleiste angehoben ist, während die nachlaufende Pulverglättungsleiste abgesenkt ist. Das Anheben bzw. Absenken erfolgt vorzugsweise an den Umkehrstellen.

Die Bauplattform kann nach einer jeweiligen Präparation einer Pulverschicht vorzugsweise noch gesteuert vertikal bewegt werden, um die Größe des Strahlauftreffpunktes im Falle der Bestrahlung mit einem fokussierten Laserstrahl auf der Pulverschicht einzustellen und/oder ggf. sogar während des Bestrahlungsvorgangs zu variieren.

Die Pulvereinlassstelle kann ein z. B. rundes Mündungsloch des Pulverzuführungskanals mit relativ kleinem Durchmesser sein. Insbesondere für diesen Fall wird es vorgeschlagen, dass die Pulverglättungsleisten in Draufsicht die Form von Bögen haben, die in der Pulvernachfüllwartestellung des Glättungsschiebers in Richtung zur Bauplattformachse konvex sind. Eine solche besonders bevorzugte Lösung hat den Vorteil, dass bei der Bewegung des Glättungsschiebers aus der Pulvernachfüllwartestellung heraus in Richtung zur Bauplattform die zunächst im Wesentlichen auf das Gebiet der relativ kleinen Pulvereinlassstelle konzentrierte nachgelieferte Pulvermenge rasch über einen breiteren Bereich der nachlaufenden Glättungsleiste verteilt wird, so dass sich die Glättungsleiste auf hinreichender Breite Pulvermaterial über der Bauplattform verteilen kann.

Vorzugsweise ist die wenigstens eine Pulvereinlassstelle eine im Vergleich zu der Bauplattform kleine Öffnung. Dadurch kann eine unkontrollierte Verschmutzung des Prozessraums durch fehlgeleitetes oder überschüssiges Pulver vermieden werden. Eine solche Verschmutzung tritt insbesondere dann auf, wenn, zum Beispiel bei einer Pulverzufuhr durch Hubkolben, eine Pulvereinlassstelle relativ groß ausgebildet ist, um kleine Hubwege zu erreichen.

Bei der Rückfahrbewegung des Glättungsschiebers wird aufgrund der Bogenform der Glättungsschieberleisten überschüssiges Pulver wieder tendenziell auf einen schmaleren Scheitelbereich des dann nachlaufenden Glättungsschiebers gesammelt. Auch dies ist eine Maßnahme, die unkontrollierte Verschmutzung des Prozessraums durch überschüssiges Pulver zu vermeiden.

Die vorstehend genannten Vorteile können auch bei der Verwendung von nur einer Pulverglättungsleiste genutzt werden, welche mit ihrer konvexen Seite voran Pulver auf einen breiteren Bereich verteilen kann und mit ihrer konkaven Seite voran einen Pulver auf einen schmaleren Bereich sammelnden Effekt haben kann. Wie oben schon erwähnt, erfolgt die Pulverzufuhr vorzugsweise dann, wenn der Glättungsschieber in seiner Pulvernachfüllwartestellung ist, und zwar in einer jeweiligen Phase der Pulververfestigung mittels der Pulververfestigungseinrichtung; im Falle selektiven Laserschmelzens während der Bestrahlungsphasen der Pulverschicht.

Für die Pulverförderung in dem Pulverführungskanal in Richtung zum Prozessraum hat sich ein Schneckenförderer oder Spiralförderer als besonders geeignet erwiesen, der eine in dem Pulverzuführungskanal vorgesehene Förderschnecke oder -spirale aufweist. Der Pulverzuführungskanal kann z.B. ein Rohr oder ggf. einen Pulverzuführungsschlauch aus flexiblem Material umfassen.

Vorzugsweise handelt es sich bei der Vorrichtung nach der Erfindung um eine SLM-Vorrichtung, bei der die Pulververfestigungseinrichtung eine Bestrahlungseinrichtung mit einer Strahlungsquelle, insbesondere Laserstrahlungsquelle aufweist, deren Strahlung ortsselektiv auf die Bauplattform zu richten ist, um Pulver einer jeweils zuletzt darauf präparierten Pulverschicht zu zusammenhängenden Bereichen umzuschmelzen. Gemäß einer weiteren Ausführungsform der Erfindung ist die Vorrichtung so ausgestaltet, dass sie zur Durchführung des Verfahrens des selektiven Lasersinterns verwendbar ist.

Vorzugsweise ist die Bauplattform relativ zur Basisebene des Prozessraumbodens jeweils um das Maß einer gewünschten Pulverschichtdicke in eine neue Absenkstellung absenkbar, um eine jeweilige neue Pulverschicht aufzunehmen, wobei ferner die Unterseite der wenigstens einen Pulverglättungsleiste im Wesentlichen auf der Höhe der Basisebene des Prozessraumbodens angeordnet ist, insbesondere mit letzterer Kontakt hat. Vorzugsweise kann die Bauplattform nach einer jeweiligen Präparation einer Pulverschicht noch gesteuert vertikal bewegt werden, um die Größe des Strahlauftreffpunktes im Falle der Bestrahlung mit einem fokussierten Laserstrahl auf der Pulverschicht einzustellen und/oder ggf. sogar während des Bestrahlungsvorgangs zu variieren. Diesem Gesichtspunkt der Variation der Größe des Strahlauftreffpunktes durch Vertikalverstellung der Bauplattform kommt ggf. selbständige erfinderische Bedeutung in apparativer und verfahrenstechnischer Hinsicht zu. Der Anmelder behält sich vor, darauf noch Patentansprüche zu richten.

Der Pulverförderer ist mit einer elektronischen Steuereinrichtung derVorrichtung vorzugsweise so steuerbar, dass er eine jeweilige vorbestimmte Menge Pulver für die Präparierung einer jeweiligen nachfolgend zu verfestigenden Pulverschicht in den Prozessraum einbringt. Dabei sollte die Pulvermenge so dosiert sein, dass sie für die Präparation der betreffenden Pulverschicht gerade ausreicht, so dass wenig überschüssiges Pulver im Prozessraum zu handhaben ist. Die Pulverzufuhr erfolgt vorzugsweise dann, wenn der Glättungsschieber in seiner Pulvernachfüllwartestellung ist, und zwar in einer jeweiligen Phase der Pulververfestigung mittels der Pulververfestigungseinrichtung; im Falle selektiven Laserschmelzens während der Bestrahlungsphasen der Pulverschicht.

Die Höheneinstellung der Bauplattform kann zum Zwecke der Modifikation der Größe der Strahlauftrittsstelle des fokussierten Laserstrahls auf der jeweils zuletzt präparierten Pulverschicht variiert werden. Dabei ist die Strahlung der Strahlungsquelle in Form eines fokussierten Strahls, insbesondere fokussierten Laserstrahls, auf die Bauplattform zu richten, wobei die Bauplattform mittels der steuerbaren Antriebseinheit zwischen unmittelbar aufeinander folgenden Pulverschichtenpräparierungsvorgängen relativ zum Brennpunkt bzw. der Brennebene des fokussierten Strahls vertikal verstellbar ist, um die Größe des Strahlauftreffpunktes auf der zuletzt auf der Bauplattform präparierten Pulverschicht zu variieren. Durch Variation der Größe des Strahlauftreffpunkts kann die jeweilige Energiedichte, also die pro Flächeneinheit und Zeiteinheit an der Auftreffstelle auftreffenden Strahlung variiert werden. Die höchste Energiedichte wird üblicherweise erhalten, wenn die Oberfläche der präparierten Pulverschicht in der Brennebene des fokussierten Strahls liegt. In diesem Fall sind am Strahlauftreffpunkt rasch sehr hohe Temperaturen erreichbar. Der Strahlauftreffpunkt hat jedoch eine äußerst geringe Ausdehnung. Insbesondere bei niedrig schmelzenden Pulvermaterialien ist es gar nicht erforderlich, eine derart hohe Energiedichte beim Abscannen der Pulverschichten mit dem fokussierten Strahl an den zu verfestigenden Stellen zu verwenden. Vielmehr kann es Sinn machen, mit einem etwas "defokussierten" Strahl die Pulverschicht abzutasten. Dieser Strahl hat dann eine etwas größere Ausdehnung des Strahlauftreffpunktes, so dass beim Abtasten der Pulverschicht jeweils eine breitere Abtastspur erzeugt werden kann. Davon ist auch in der Vergangenheit bereits Gebrauch gemacht worden. Allerdings hat man zur Realisierung dieser Fokussierungs- bzw. Defokussierungsmöglichkeiten verstellbare optische Elemente, insbesondere Linsen im Strahlengang der Bestrahlungseinrichtung vorgesehen und diese optischen Elemente dann so gesteuert, dass sie die Größe des Strahlauftreffpunktes auf der zuletzt auf der Bauplattform präparierten Pulverschicht in gewünschter Weise einstellen.

Eine solche Vorrichtung kommt ohne eine solche zusätzliche Steuerung optischer Komponenten aus, indem sie die ohnehin vorhandene steuerbare Antriebseinheit für den Vertikalantrieb der Bauplattform nutzt, um zur Fokussierung/Defokussierung des Pulververfestigungsstrahles die Bauplattform in gewünschter Weise einzustellen. Dies kann jeweils unmittelbar vor Start des Bestrahlungsvorganges erfolgen.

Bedarfsweise kann die Bauplattform mittels der steuerbaren Antriebseinheit relativ zum Brennpunkt bzw. der Brennebene des Strahles jedoch auch während des Vorgangs der ortsselektiven Bestrahlung der zuletzt auf der Bauplattform präparierten Pulverschicht gesteuert verstellbar sein, um die Größe des Strahlauftreffpunktes je nach den Koordinaten des Strahlauftreffpunktes auf der Pulverschicht in gewünschter Weise zu variieren. Diese Möglichkeit hat sich als besonders vorteilhaft für einen raschen und gleichmäßigen Bauprozess eines Formkörpers erwiesen.

Ausführungsbeispiele der Vorrichtung nach der Erfindung werden im Folgenden unter Bezugnahme auf die Figuren näher erläutert.
- Fig. 1: zeigt in einer Perspektivdarstellung eine SLM-Vorrichtung in Außenansicht.
- Fig. 2a und 2b: zeigen in grob schematischer Weise eine Momentaufnahme während des Vorgangs der Bestrahlung der zuletzt präparierten Pulverschicht auf der Bauplattform.
- Fig. 3a und 3b: zeigen in einer grob schematischen Darstellung eine erfindungsgemäße Pulverabsaugglocke über der Bauplattform bei unterschiedlichen Höheneinstellungen der Bauplattform.
- Fig. 4: zeigt in einer perspektivischen Darstellung das Prozessraumabteil der Vorrichtung aus Fig. 1 in einem weitgehend auseinander gebauten Zustand, um den Blick auf eine Schichtenpräparierungseinrichtung freizugeben.
- Fig. 5: zeigt in schematischen Darstellungen a) - h) eine Sequenz von Momentaufnahmen bei der Schichtenpräparation.
- Fig. 6: zeigt in einer perspektivischen Darstellung entsprechend Fig. 4 eine Schichtenpräparierungseinrichtung und den Prozessraum einer weiteren SLM-Vorrichtung.
- Fig. 7: zeigt in grob schematischer Weise drei Momentaufnahmen der Betriebsweise einer Pulverglättungsleiste, die eine von der geradlinigen Form abweichende Form aufweist.
- Fig. 8a, 8b und 8c: zeigen in einer perspektivischen Darstellung das Prozessraumabteil der Vorrichtung aus Fig. 1 in einem weitgehend auseinander gebauten Zustand, um den Blick auf eine Schichtenpräparierungseinrichtung freizugeben, die in den Fig. 8a - 8c in unterschiedlichen Einstellungen gezeigt ist.
- Fig. 9: zeigt eine Draufsicht auf eine Schichtenpräparierungseinrichtung und den Prozessraumboden einer SLM-Vorrichtung.
- Fig. 10: zeigt ein weiteres Beispiel einer Schichtenpräparierungseinrichtung für eine SLM-Vorrichtung in einer Perspektivansicht, wie sie ähnlich auch in den Fig. 8a - 8c verwendet wurde.
- Fig. 11: zeigt eine SLM-Vorrichtung der in Fig. 10 dargestellten Bauart, jedoch mit abgewandelter Form der Pulverglättungsleisten.

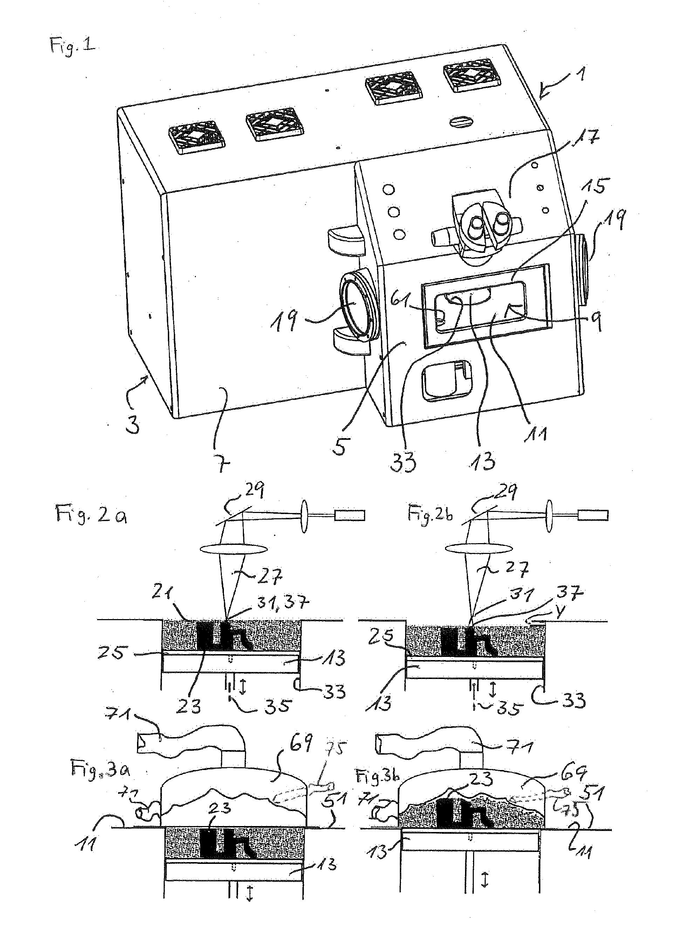

Fig. 1 zeigt als Beispiel für eine SLM-Vorrichtung ein SLM-Tischgerät, welches z. B. zur Herstellung von Zahnersatzteilen, Schmuck, kleinen Maschinenteilen usw. verwendet werden kann und insbesondere auch für den Bereich der Erforschung von Vorgängen beim selektiven Laserschmelzen (SLM) oder ggf. beim selektiven Lasersintern (SLS) geeignet ist.

Die SLM-Vorrichtung 1 weist ein Gehäuse 3 mit einem Prozessraumabteil 5 und einem Versorgungsabteil 7 auf. In dem Prozessraumabteil 5 befindet sich der Prozessraum 9 mit seinem Prozessraumboden 11 und der darin eingelassenen Bauplattform 13, wie dies durch das Sichtfenster 15 in der vorderen Gehäusewand des Prozessraumabteils 5 zu erkennen ist. Ein Stereomikroskop 17 kann genutzt werden, um den SLM-Bauprozess zu beobachten und/oder die Einstellung bestimmter Parameter, wie z. B. die Fokaleinstellung des verwendeten Laserstrahls zu prüfen. In den einander entgegengesetzten Seitenwänden des Prozessraumabteils 5 sind Durchgriffsöffnungen 19 vorgesehen, die von einem daran vorgesehenen Durchgriffshandschuh (nicht erkennbar) nach außen hin abgedichtet sind. Das Prozessraumabteil 5 ist somit als Handschuhbox ausgebildet und erlaubt den manuellen Zugriff auf Komponenten in dem Prozessraum 9 von außen her. Während des Bauprozesses eines Formkörpers herrscht in dem Prozessraum 9 vorzugsweise Schutzgasatmosphäre.

In dem Versorgungsabteil 7 sind unter anderem Komponenten für die Schutzgasversorgung, Komponenten der elektronischen Steuerung des Gerätes sowie elektrische Komponenten vorgesehen.

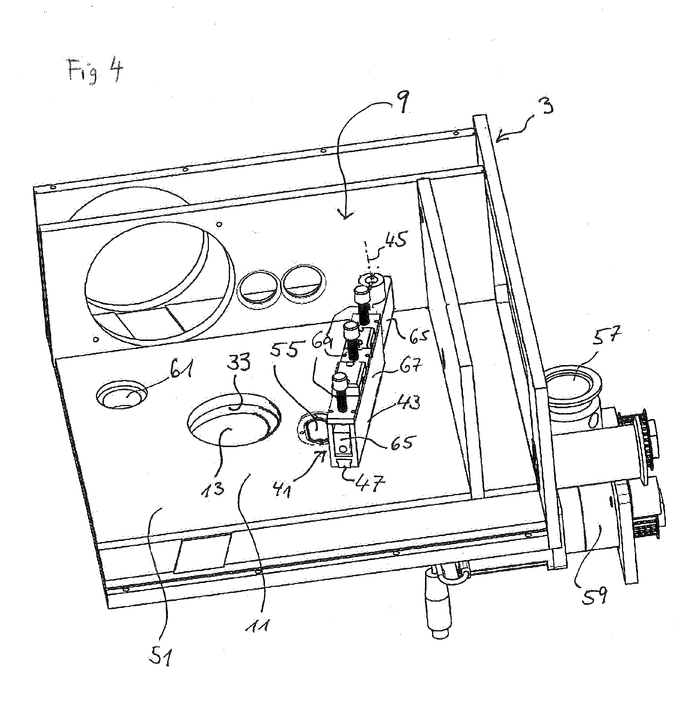

In der Fig. 4 ist der Prozessraumbereich der in Fig. 1 gezeigten SLM-Vorrichtung erkennbar, wobei das Gehäuse 3 im weitgehend auseinandergebauten Zustand dargestellt ist, um den Blick auf die Pulverschichtenpräparierungseinrichtung 41 freizugeben. Diese umfasst einen Glättungsschieber 43, welcher als ein Schwenkarm ausgebildet ist, der um eine vertikale Schwenkachse 45 zwischen der in Fig. 4 gezeigten ersten Umkehrstellung an einer ersten Umkehrstelle und einer nicht gezeigten zweiten Umkehrstellung an einer betreffenden zweiten Umkehrstelle hin- und herschwenkbar ist. Bei einer solchen Schwenkbewegung überstreicht der Glättungsschieber 43 die Bauplattform 13 im Prozessraumboden 11, um eine glatte Pulverschicht auf der Bauplattform 13 zu erzeugen. Der Glättungsschieber 43 hat zu diesem Zweck eine Pulverglättungsleiste 47 aus Silikon oder dgl., deren Unterseite beim Überstreichen der Bauplattform 13 auf der Basisebene 51 des Prozessraumbodens 11 liegt. Das Pulver wird mittels einer Pulverversorgungseinrichtung in den Prozessraum 9 gefördert. Das zugeführte Pulver wird durch eine Pulvereinlassöffnung oder Pulvereinlassstelle 55 im Prozessraumboden 11 von unten her in den Prozessraum 9 eingebracht. Die Pulvereinlassöffnung 55 befindet sich an einer Stelle zwischen der Bauplattform 13 und der in Fig. 4 gezeigten Umkehrstelle der Glättungsleiste 47, die auch eine Pulvernachfüllwartestellung des Glättungsschiebers 43 ist.

Nach der Zufuhr einer dosierten Menge Pulvers in den Prozessraum 9 durch die Pulvereinlassöffnung 55 hindurch veranlasst die Steuerung der SLM-Vorrichtung den Glättungsschieber 43 dazu, von der in Fig. 4 gezeigten Umkehrstellung in die zweite Umkehrstellung zu verschwenken, so dass das dabei von der Pulverglättungsleiste 47 vorgeschobene Pulver zu der Bauplattform 13 gelangt. Die Bauplattform 13 ist zuvor um das Maß der gewünschten Pulverschichtdicke in ihrer Zylinderführung 33 abgesenkt worden. Da die Glättungsleiste 47 beim Überstreichen der Bauplattform 13 mit ihrer Unterseite auf der Basisebene 51 des Prozessraumbodens 11 liegt, wird somit eine geglättete Pulverschicht der gewünschten Dicke erzeugt und es kann danach der Bestrahlungsvorgang zur ortsselektiven Verfestigung der zuvor präparierten Pulverschicht beginnen.

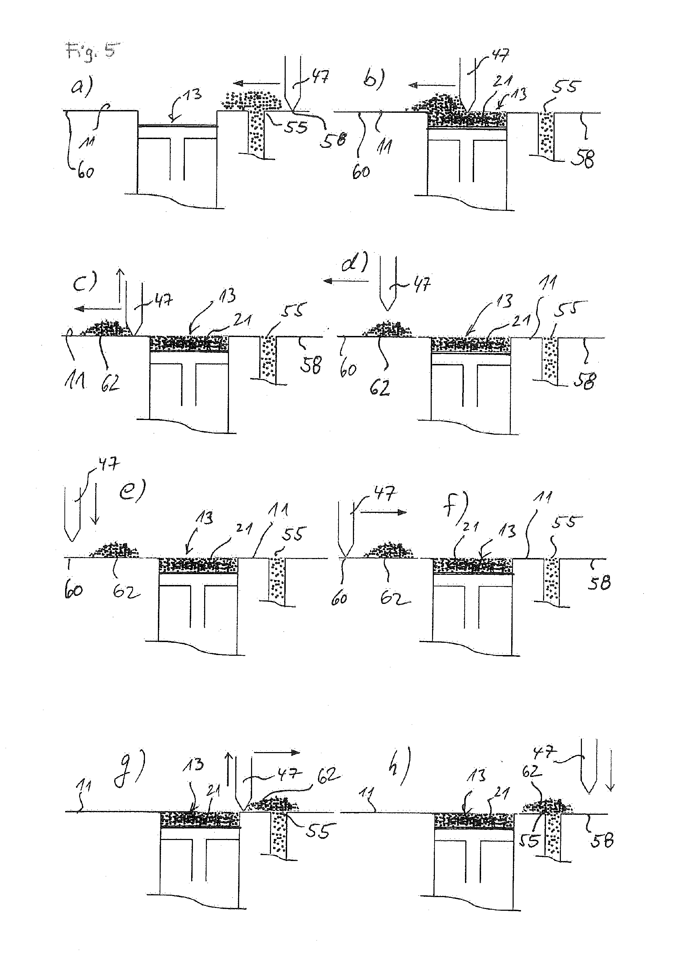

Der Bewegungsablauf der Pulverglättungsleiste 47 bei der Hin- und Herbewegung zwischen den Umkehrstellen 58, 60 ist in schematischen Momentaufnahmen in Fig. 5a - h illustriert. Die Pfeile in den Fig. 5a - h sollen die jeweilige Bewegungsrichtung der Pulverglättungsleiste andeuten.

Fig. 5a zeigt die Pulverglättungsleiste 47 an der ersten Umkehrstelle 58, und zwar im abgesenkten Zustand mit auf der Basisebene des Prozessraumbodens 11 liegender Unterseite. Die Pulverversorgungseinrichtung hat an der Pulvereinlassstelle 55 eine bestimmte Menge Pulver in den Prozessraum gefördert, wobei diese Pulvermenge gemäß Fig. 5a zunächst in einem Bereich zwischen der ersten Umkehrstelle 58 und der Bauplattform 13 vorliegt. Die Pulverglättungsleiste 47 wird dann ausgehend von der Situation gemäß Fig. 5a horizontal in Richtung auf die zweite Umkehrstelle 60 bewegt, wobei sie die Bauplattform 13 überstreicht, wie dies in Fig. 5b zu erkennen ist. Die Bauplattform 13 ist zuvor um das Maß der gewünschten Pulverschichtdicke abgesenkt worden, so dass bei der Bewegung der Pulverglättungsleiste 47 gemäß Fig. 5b Pulver auf der Bauplattform 13 aufgebracht und zu einer homogenen Pulverschicht 21 eingeebnet wird.

Fig. 5c zeigt die Situation, in der die Pulverglättungsleiste 47 die Bauplattform 13 vollständig überstrichen und eine Restmenge 62 an Pulver vor sich hergeschoben hat. Ausgehend von der Situation gemäß Fig. 5c wird die Pulverglättungsleiste 47 vom Prozessraumboden 11 abgehoben, so dass sie bei ihrer weiteren Bewegung in Richtung zur zweiten Umkehrstelle 60 über die genannte Pulverrestmenge 62 hinweg geführt wird, wie dies in Fig. 5d angedeutet ist.

Bei Erreichen der zweiten Umkehrstelle 60 wird die Pulverglättungsleiste 47 wieder auf den Prozessraumboden 11 abgesenkt (vgl. Fig. 5e und f), um schließlich in Richtung zur ersten Umkehrstelle 58 zurückbewegt zu werden. Dabei überstreicht die Pulverglättungsleiste 47 erneut die Bauplattform 13, wobei sie die betreffende Pulverrestmenge 62 in den Bereich der Pulvereinlasstelle 55 verschiebt (vgl. Fig. 5g). Vor Erreichen der ersten Umkehrstelle 58 wird die Pulverglättungsleiste 47 allerdings wieder vom Prozessraumboden 11 abgehoben, so dass sie über die Pulvereinlassstelle 55 und das daraufliegende Pulver hinweggeführt werden kann (vgl. Fig. 5g und h). Bei Erreichen der ersten Umkehrstelle 58 wird die Pulverglättungsleiste 47 dann schließlich wieder auf den Prozessraumboden 11 abgesenkt, wie dies in Fig. 5h angedeutet ist.

In der Situation gemäß Fig. 5h ist die Pulverschicht 21 optimal präpariert, so dass der Pulverbefestigungsschritt stattfinden kann. Danach wird die Bauplattform 13 um das Maß der gewünschten nächsten Pulverschichtdicke abgesenkt, woraufhin die vorstehend unter Bezugnahme auf Fig. 5a - h erläuterte Sequenz der Schichtenpräparation erneut durchlaufen werden kann.

Der anhand der Fig. 5a - h beschriebene Bewegungsablauf kann durchaus abgewandelt sein. So kann ein Pulververfestigungsschritt und ein Absenkschritt der Bauplattform 13 zwischengeschaltet sein, bevor ausgehend von der Situation gemäß Fig. 5f die Pulverglättungsleiste 47 in Richtung auf die erste Umkehrstelle 58 zurückbewegt wird. In einem solchen Fall sollte der Pulvervorrat, also die oben als Restmenge 62 bezeichnete Pulvermenge groß genug sein, um eine weitere Pulverschicht 21 beim Überstreichen der Bauplattform 13 in Richtung zur ersten Umkehrstelle präparieren zu können.

Bei dem hier verfolgten Konzept, jeweils eine über die Bauplattform hinweg verschobene Pulvermenge zu überspringen und bei der Rückbewegung der Pulverglättungsleiste 47 wieder zur Bauplattform 13 hin mitzunehmen, kann bedarfsweise auch eine größere Pulvermenge, die für eine Vielzahl von Pulverschichten 21 ausreicht, mittels der Pulverglättungsleiste 47 hin- und hergeschoben werden.

Es kann auch eine zusätzliche Pulvereinlassstelle auf der der Pulvereinlassstelle 55 entgegengesetzten Seite der Bauplattform 13 zwischen der Bauplattform 13 und der zweiten Umkehrstelle vorgesehen sein.

Der in Fig. 5a - h illustrierte Bewegungsablauf der Pulverglättungsleiste 47 kann ferner auch so modifiziert werden, dass der Absenkschritt gemäß Fig. 5e nicht bei jeder Rückfahrbewegung der Pulverglättungsleiste 47 zur ersten Umkehrstelle 58 erfolgt, sondern nur gelegentlich, nach Präparierung mehrerer Schichten 21 auf der Bauplattform. In einem solchen Fall könnte sich zwar zwischendurch eine ggf. etwas größere Restmenge 62 an Pulver zwischen der Bauplattform 13 und der zweiten Umkehrstelle ansammeln. Diese Restmenge 62 an Pulver kann jedoch wieder aufgenommen werden, wenn gelegentlich der Zwischenschritt gemäß Fig. 5e wieder eingefügt wird.

Eine weitere mögliche Variante im Bewegungsablauf der Pulverglättungsleiste 47 besteht darin, dass die Pulverglättungsleiste 47 ausgehend von der Situation gemäß Fig. 5d oder der Situation gemäß Fig. 5e unter Weglassung des Absenkschrittes unmittelbar in die Situation gemäß Fig. 5h überführt wird, so dass der Absenkschritt erst dann wieder erfolgt, wenn die Pulverglättungsleiste 47 bei der Zurückbewegung die erste Umkehrstelle 58 erreicht hat.

Grundsätzlich kann also mit der in Fig. 4 gezeigten Vorrichtung das Konzept verfolgt werden, dass das Pulver in dem Bereich zwischen den Umkehrstellen 58, 60 der Pulverglättungsleiste 47 konzentriert bleibt, indem die Pulverglättungsleiste 47 so bewegt wird, dass sie in diesem Bereich angehäufte Pulvermengen "überspringen" kann.

Während des Bestrahlungsvorgangs kann bereits wieder eine nächste Pulverdosis durch die Pulvereinlassstelle 55 in den Prozessraum 9 für die Präparation der nächsten Pulverschicht auf der Bauplattform 13 gefördert werden. Das Pulver wird hierzu aus einem bei 57 angeschlossenen externen Vorratsbehälter der Pulvereinlasstelle 55 zugeführt, wobei ein unterhalb des Prozessraumbodens 11 verlaufender Pulverzuführungskanal die Pulvereinlassstelle 55 mit dem Vorratsbehälter verbindet. In dem Pulverzuführungskanal ist eine Förderschnecke drehbar aufgenommen, die von einem gesteuert betreibbaren Elektromotor 59 zur Drehung angetrieben wird, um das Pulver aus dem Vorratsbehälter heraus zur Pulvereinlasstelle 55 zwangszufördern.

Die Vorgänge der Pulverschichtenpräparierung auf der Bauplattform 13 und der orstsselektiven Verfestigung durch Bestrahlung des Pulvers wiederholen einander, bis der gewünschte Formkörper 23 (Fig. 2a, 2b) fertiggestellt ist. Die Führung des Laserstrahls 27 bei dessen Abtastbewegung über die Bauplattform 13 erfolgt in bekannter Weise nach Maßgabe von Geometriebeschreibungsdaten des Formkörpers jeweils betreffend die aktuell bestrahlte Schicht.

In Fig. 4 ist ein weiteres Loch 61 in dem Prozessraumboden 11 erkennbar. Dieses dient z. B. dazu, überschüssiges Pulver vom Prozessraumboden 11 nach Fertigstellung des Formkörpers abzuführen. Dies kann manuell unter Verwendung der Dichthandschuhe (nicht gezeigt) an den Durchgriffsöffnungen 19 mit einem Fegewerkzeug oder dgl. erfolgen.

In Fig. 4 weist der Glättungsschieber 43 einen in einer bestimmten Horizontalebene verschwenkbaren Basisarm 65, an dem ein höhenverstellbarer Halterahmen 67 der Pulverglättungsleiste 47 angeordnet ist. Der Halterahmen 67 ist durch Federanordnungen 69 zu der abgesenkten Stellung hin vorgespannt. Ein (nicht gezeigter) Pneumatikzylinder an dem Basisarm 65 kann mit Gas beaufschlagt werden, um den Halterahmen 67 entgegen der Federvorspannung der Federn 69 relativ zu dem Basisarm 65 und dem Prozessraumboden 11 anzuheben. Es liegt somit im Beispielsfall ein pneumatischer Stellantrieb für die gesteuerte Höhenverstellung der Pulverglättungsleiste 47 vor.

Alternativ könnte der Stellantrieb aber z. B. auch ein elektromagnetischer Stellantrieb oder ggf. ein hydraulischer Stellantrieb oder ggf. ein rein mechanischer Stellantrieb sein. In dem Beispielsfall der Fig. 4 ist lediglich ein geringer Hub des Halterungsrahmens 67 und der daran befestigten Pulverglättungsleiste 47 von wenigen Millimetern vorgesehen. Selbstverständlich kann alternativ der Hub den Erfordernissen angepasst sein.

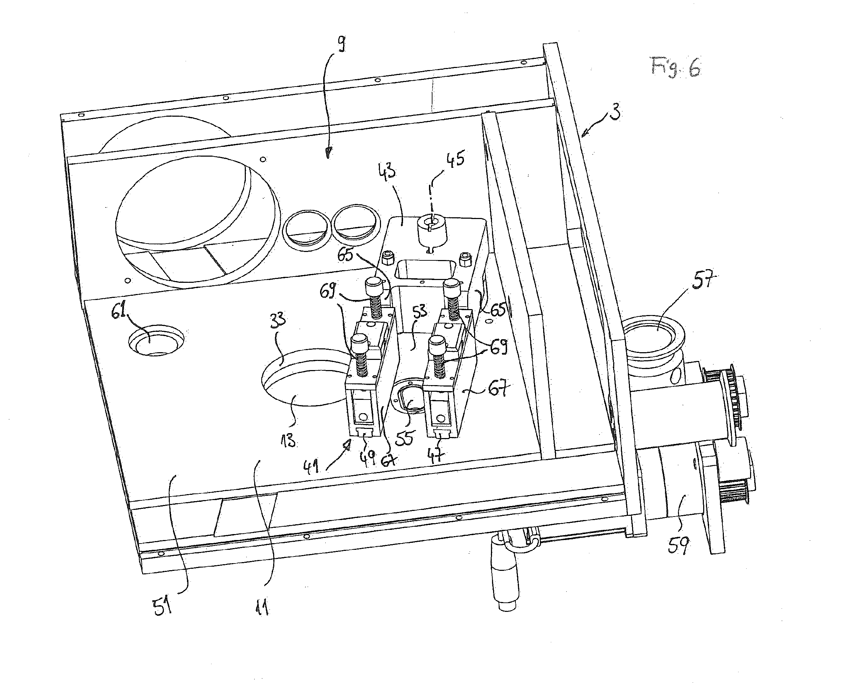

Fig. 6 zeigt eine Variante des Beispiels der Fig. 4. Elemente in Fig. 6, die ihrem Aufbau oder/und ihrer Wirkung nach Elementen in Fig. 4 entsprechen sind mit korrespondierend gleichen Bezugszeichen gekennzeichnet. In Fig. 6 umfasst die Pulverschichtenpräparierungseinrichtung 41 zwei Pulverglättungsleisten 47, 49. Die Pulverglättungsleisten 47, 49 begrenzen zwischen sich einen nach unten offenen Zwischenraum 53, in dem der Glättungsschieber 43 Pulver zur Bauplattform 13 transportieren kann. Das Pulver wird mittels der Pulverversorgungseinrichtung in den Prozessraum 9 gefördert, wie dies auch bereits unter Bezugnahme auf Fig. 4 erläutert wurde. Die Pulvereinlassöffnung 55 befindet sich an einer Stelle zwischen der Bauplattform 13 und der in Fig. 6 gezeigten Umkehrstelle der Glättungsschieberleiste 47. Genauer gesagt, liegt die Pulvereinlassöffnung 55 exakt unter dem Zwischenraum 53 zwischen den Pulverglättungsleisten 47, 49, wenn der Glättungsschieber 43 in der in Fig. 6 gezeigten ersten Umkehrstellung ist, die auch eine Pulvernachfüllwartestellung des Glättungsschiebers 43 ist. Nach der Zufuhr einer dosierten Menge Pulvers in den Zwischenraum 53 veranlasst die Steuerung der SLM-Vorrichtung den Glättungsschieber 43 dazu, von der in Fig. 6 gezeigten ersten Umkehrstellung in die zweite Umkehrstellung zu verschwenken, so dass das dabei von der nachlaufenden Pulverglättungsleiste 47 vorgeschobene Pulver zu der Bauplattform 13 gelangt. Die Bauplattform 13 ist zuvor um das Maß der gewünschten Pulverschichtdicke in ihrer Zylinderführung 33 abgesenkt worden. Da die Glättungsleiste 47 beim Überstreichen der Bauplattform 13 mit ihrer Unterseite auf der Basisebene 51 des Prozessraumbodens 11 liegt, wird eine geglättete Pulverschicht der gewünschten Dicke erzeugt. Bei der Bewegung des Glättungsschiebers von der ersten Umkehrstelle zur zweiten Umkehrstelle ist die vorlaufende Glättungsschieberleiste 49 in ihrem angehobenen Zustand. Sie wird bei Erreichen der zweiten Umkehrstelle auf den Prozessraumboden 11 abgesenkt, wohingegen die andere Pulverglättungsleiste 47 vom Prozessraumboden 11 abgehoben wird. Sodann wird die Rückbewegung des Glättungsschiebers durchgeführt, bei der nun die vorlaufende Pulverglättungsleiste 47 in ihrem angehobenen Zustand verbleibt und die nachlaufende Glättungsschieberleiste 49 Pulver auf dem Prozessraumboden 11 vor sich herschieben kann. Bei Erreichen der ersten Umkehrstelle wird dann die Pulverglättungsleiste 47 wieder abgesenkt und die Pulverglättungsleiste 49 wieder vom Prozessraumboden abgehoben. Bei einem solchen zweiarmigen Glättungsschieber wird ebenfalls erreicht, dass eine jeweilige Pulverglättungsleiste Restpulver auf dem Prozessraumboden hinterfassen kann. Dies ist jeweils die während der aktuellen Schwenkbewegung nachlaufende Pulverglättungsleiste. Die Hubsteuerung der Pulverglättungsleisten in Fig. 6 erfolgt mit den gleichen Mitteln wie die Hubsteuerung der Glättungsleiste in Fig. 4, nämlich vorzugsweise mittels eines gegen Federvorspannung wirkenden pneumatischen Stellantriebs.

Auch für das in Fig. 6 dargestellte Beispiel gilt selbstverständlich, dass alternative Stellantriebe für den Hub der Pulverglättungsleisten 47, 49 vorgesehen sein können.

Ferner ist noch darauf hinzuweisen, dass der Glättungsschieber einer Vorrichtung nach der Erfindung in alternativen Ausführungsformen statt eines Schwenkarmes einen linear hin und her fahrbaren Halter für die Pulverglättungsleiste bzw. Pulverglättungsleisten aufweisen kann.

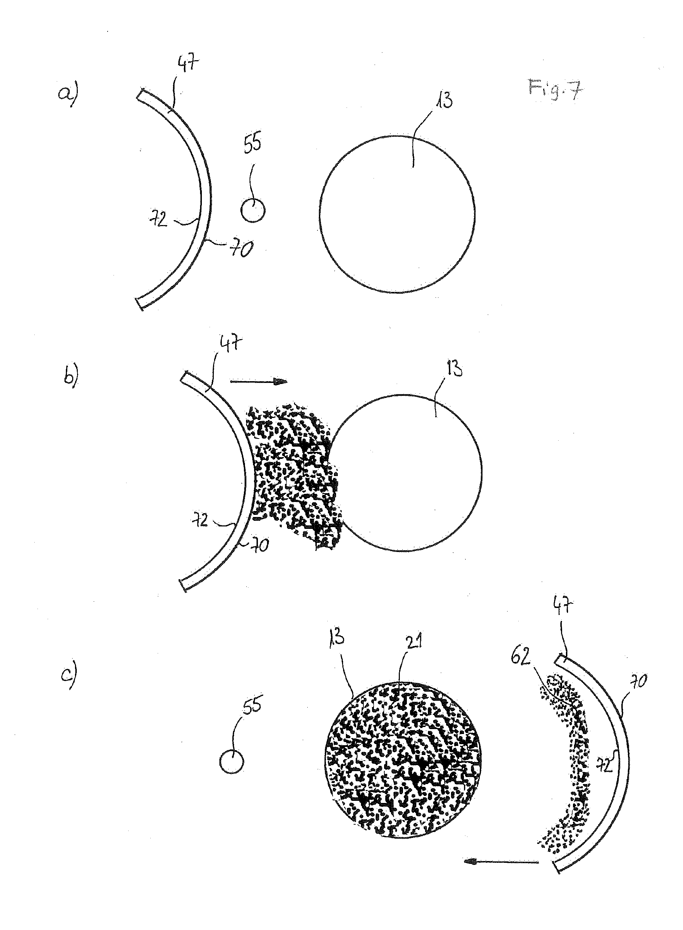

Fig. 7 illustriert in schematischen Draufsichtsdarstellungen a - c die Pulverglättungsleiste 47, die eine von der geradlinigen Form abweichende Form aufweist. In dem Beispielsfall der Fig. 7 ist die Pulverglättungsleiste 47 bogenförmig ausgestaltet, so dass sie mit ihrer konvexen Seite 70 eine Pulver breit verteilende Wirkung erzielen kann, wohingegen sie mit ihrer konkaven Seite 72 eine Pulver sammelnde Wirkung erzielen kann, und zwar je nach Bewegungsrichtung der Pulverglättungsleiste 47. In der Momentaufnahme gemäß Fig. 7a befindet sich die Pulverglättungsleiste 47 an der ersten Umkehrstelle. Dabei befindet sich zwischen der Pulverglättungsleiste 47 und Bauplattform 13 die Pulvereinlassstelle 55. Wird nun Pulver an der Pulvereinlassstelle 55 in den Prozessraum eingebracht, so kann dieses Pulver dann bei der Bewegung der Pulverglättungsleiste 47 in Richtung zur zweiten Umkehrstelle auf der Bauplattform 13 verteilt werden. Die Pulverglättungsleiste 47 ist dabei in ihrem abgesenkten Zustand am Prozessraumboden 11. Kurz vor Erreichen der zweiten Umkehrstelle wird die Pulverglättungsleiste 47 angehoben und über die zuvor mit der konvexen Seite 70 vorgeschobene Restpulvermenge 62 hinweggeführt. In der Momentaufnahme gemäß Fig. 7c ist dies bereits geschehen, so dass die Pulverglättungsleiste 47 dort an der zweiten Umkehrstelle wieder auf den Prozessraumboden abgesenkt worden ist. Von dieser Situation ausgehend wird dann die Pulverglättungsleiste 47 wieder in Richtung zur ersten Umkehrstelle bewegt, wobei die konkave Seite 72 der Pulverglättungsleiste 47 nunmehr bei der Rückbewegung die Pulvermenge 62 auf einen schmaleren Bereich zusammenführt. Eine so gekrümmte Pulverglättungsleiste 47 bringt somit ganz besondere Vorteile mit sich. Der vorstehend erläuterte Pulververteilungs- und Sammeleffekt durch eine nicht geradlinige Pulverglättungsleiste 47 kann z. B. auch erzielt werden, wenn diese statt der gezeigten stetigen Bogenform eine V-Form oder dgl. aufweist. Im Rahmen der vorliegenden Anmeldung soll der Begriff Bogen auch solche unstetig gekrümmte Geometrien, wie z. B. die V-Form umfassen.

Es sei noch darauf hingewiesen, dass die relative Höhenverstellung zwischen der Pulverglättungsleiste und dem Prozessraumboden auch so vorgenommen werden kann, dass der Prozessraumboden relativ zur Pulverglättungsleiste vertikal bewegt wird.

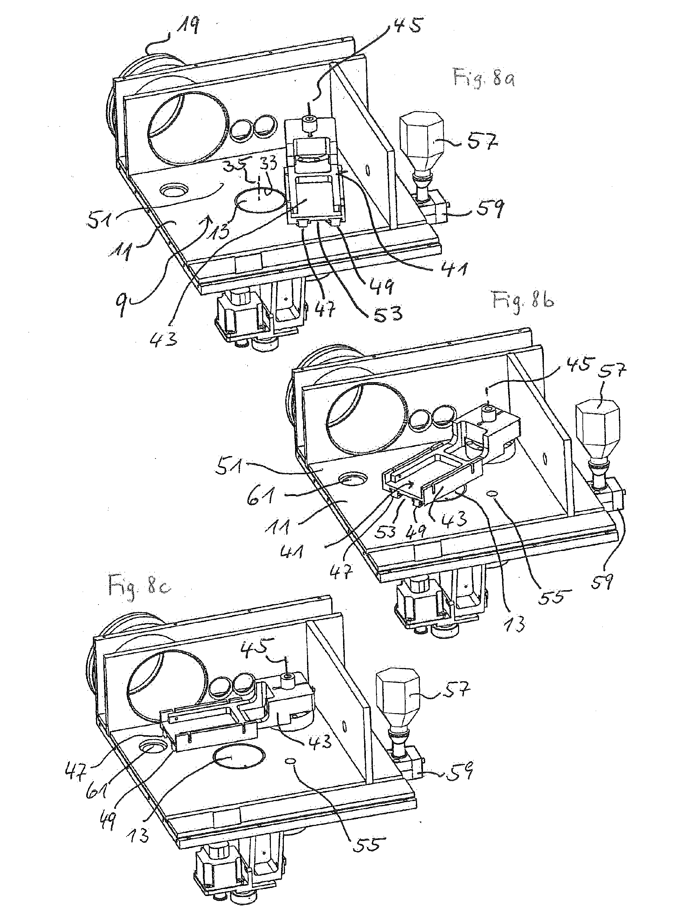

In Fig. 8a - 8c umfasst die Pulverschichtenpräparierungseinrichtung 41 zwei Pulverglättungsleisten 47, 49, wie in Bezug auf Fig. 6 bereits beschrieben, wobei analog zu der in Bezug auf Fig. 4 und 6 gegebenen Beschreibung auszuführen ist, dass in den Fig. 8a - 8c der Prozessraumbereich eines weiteren Beispiels der in Fig. 1 gezeigten SLM-Vorrichtung erkennbar ist, wobei das Gehäuse 3 im weitgehend auseinandergebauten Zustand dargestellt ist, um den Blick auf die Pulverschichtenpräparierungseinrichtung 41 freizugeben. Diese umfasst einen Glättungsschieber 43, welcher als ein Schwenkarm ausgebildet ist, der um eine vertikale Schwenkachse 45 zwischen der in Fig. 8a gezeigten ersten Umkehrstellung und der in Fig. 8c gezeigten zweiten Umkehrstellung hin- und herschwenkbar ist. Bei einer solchen Schwenkbewegung überstreicht der Glättungsschieber 43 die Bauplattform 13 im Prozessraumboden 11, um eine glatte Pulverschicht auf der Bauplattform 13 zu erzeugen. Der Glättungsschieber hat zu diesem Zweck zwei vorzugsweise gesteuert höhenverstellbare Pulverglättungsleisten 47, 49 aus Silikon oder dgl., deren Unterseiten auf der Basisebene 51 des Prozessraumbodens 11 liegen können. Die beiden Pulverglättungsleisten 47, 49 begrenzen zwischen sich einen nach unten offenen Zwischenraum 53, in dem der Glättungsschieber 43 Pulver zur Bauplattform 13 transportieren kann. Das Pulver wird mittels einer Pulverversorgungseinrichtung in den Prozessraum 9 gefördert. Das zugeführte Pulver wird durch eine Pulvereinlassöffnung oder Pulvereinlassstelle 55 im Prozessraumboden 11 von unten her in den Prozessraum 9 eingebracht. Die Pulvereinlassöffnung 55 befindet sich an einer Stelle zwischen der Bauplattform 13 und der in Fig. 8a gezeigten Umkehrstelle der Glättungsleiste 49. Genauer gesagt, liegt die Pulvereinlassöffnung 55 exakt unter dem Zwischenraum 53 zwischen den Pulverglättungsleisten 47, 49, wenn der Glättungsschieber 43 in der in Fig. 8a gezeigten Umkehrstellung ist, die auch eine Pulvernachfüllwartestellung des Glättungsschiebers 43 ist. Es sei darauf hingewiesen, dass bei einer solchen Ausgestaltung des Glättungsschiebers mit zwei das Pulver zwischen sich aufnehmenden Pulverglättungsleisten eine Variante interessant und selbständig schutzfähig sein kann, bei welcher das Merkmal der Höhenverstellbarkeit der Pulverglättungsleisten nicht verwirklicht ist.

Nach der Zufuhr einer dosierten Menge Pulvers in den Zwischenraum 53 veranlasst die Steuerung der SLM-Vorrichtung den Glättungsschieber 43 dazu, von der in Fig. 8a gezeigten Umkehrstellung in die in Fig. 8c gezeigte Umkehrstellung zu verschwenken, so dass das dabei von der nachlaufenden Pulverglättungsleiste 49 vorgeschobene Pulver zu der Bauplattform 13 gelangt. Die Bauplattform 13 ist zuvor um das Maß der gewünschten Pulverschichtdicke in ihrer Zylinderführung 33 abgesenkt worden. Durch die Glättungsleisten 47, 49 wird beim Überstreichen der Bauplattform 13 somit eine geglättete Pulverschicht der gewünschten Dicke erzeugt. Der Glättungsschieber 43 fährt dann zurück in die Pulvernachfüllwartestellung (Umkehrstellung) gemäß Fig. 8a, und es kann der Bestrahlungsvorgang zur ortsselektiven Verfestigung der zuvor präparierten Pulverschicht beginnen.

Während des Bestrahlungsvorgangs kann bereits wieder eine nächste Pulverdosis durch die Pulvereinlassstelle 55 in den Zwischenraum 53 des Glättungsschiebers 43 für die Präparation der nächsten Pulverschicht auf der Bauplattform 13 gefördert werden. Das Pulver wird hierzu aus einem externen Vorratsbehälter 57 der Pulvereinlasstelle 55 zugeführt, wobei ein unterhalb des Prozessraumbodens 11 verlaufender Pulverzuführungskanal die Pulvereinlassstelle 55 mit dem Vorratsbehälter 57 verbindet. In dem Pulverzuführungskanal ist eine Förderschnecke drehbar aufgenommen, die von einem gesteuert betreibbaren Elektromotor 59 zur Drehung angetrieben wird, um das Pulver aus dem Vorratsbehälter 57 heraus zur Pulvereinlasstelle 55 zwangszufördern.

Die Vorgänge der Pulverschichtenpräparierung auf der Bauplattform 13 und der orstsselektiven Verfestigung durch Bestrahlung des Pulvers wiederholen einander, bis der gewünschte Formkörper 23 fertiggestellt ist. Die Führung des Laserstrahls 27 bei dessen Abtastbewegung über die Bauplattform 13 erfolgt in bekannter Weise nach Maßgabe von Geometriebeschreibungsdaten des Formkörpers jeweils betreffend die aktuell bestrahlte Schicht.

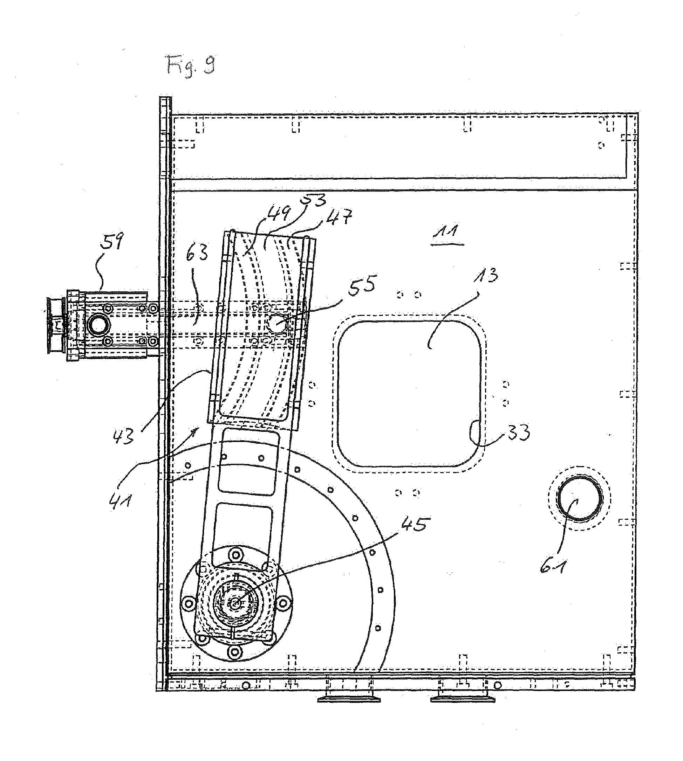

In Fig. 9 ist eine Draufsicht auf den Prozessraumboden 11 und den Glättungsschieber 43 einer SLM-Vorrichtung gezeigt, die nur in Nuancen, die für die vorliegende Beschreibung unbedeutend sind, von der SLM-Vorrichtung nach den Fig. 8a - 8c abweicht. Elemente in Fig. 9, die Elementen in den Fig. 8a - 8c gegenständlich oder funktional entsprechen, sind mit korrespondierenden Bezugszeichen gekennzeichnet, so dass zum Verständnis der SLM-Vorrichtung in Fig. 9 weitgehend auf die Beschreibung der SLM-Vorrichtung gemäß Fig. 8a - 8c zurückgegriffen werden kann. In Fig. 9 ist mit gestrichelten Linien der vom Prozessraumboden verdeckte Pulverzuführungskanal 63 angedeutet. Er mündet mit der Pulvereinlassstelle 55 von unten her in den Prozessraumboden 11. Der Glättungsschieber 43 befindet sich in Fig. 9 in der Umkehrstellung bzw. Pulvernachfüllwartestellung, so dass die Pulvereinlassstelle 55 exakt in den Zwischenraum 53 zwischen den vorzugsweise gesteuert höhenverstellbaren Pulverglättungsleisten 47 und 49 führt.

Die Pulverglättungsleisten 47 und 49 haben in der Draufsicht gemäß Fig. 9 die Form von Bögen, die in der gezeigten Pulvernachfüllwartestellung des Glättungsschiebers in Richtung zur Bauplattform 13 konvex sind. Aufgrund dieser Bogenform kommt es zu einer raschen Verteilung des über die relativ enge Pulvereinlassstelle 55 zugeführten Pulvers längs der Pulverglättungsleiste 49, wenn der Glättungsschieber 43 in Richtung zur Bauplattform 13 verschwenkt wird. Wenn der Glättungsschieber 43 nach dem relativ kleinen Schwenkwinkel die Bauplattform 13 erreicht hat, ist das Pulver in dem Zwischenraum 53 bereits gut vorverteilt, so dass es gleichmäßig über der Bauplattform 13 bei der weiteren Schwenkbewegung des Glättungsschiebers 43 verstrichen werden kann. Bei der Zurückbewegung des Glättungsschiebers 43 kommt dann die bogenförmige Krümmung der Pulverglättungsleiste 47 zur Wirkung, indem sie etwaiges überschüssiges Pulver tendenziell wieder zu dem unmittelbar auf die Pulvereinlassstelle 55 zulaufenden Scheitelbereich des Bogens hin sammelt. Das überschüssige Pulver kann auf diese Weise gut in dem Zwischenraum 53 gehalten werden, so dass eine unkontrollierte Verschmutzung des Prozessraumbodens 11 mit überschüssigem Pulver während des Bauprozesses weitestgehend vermieden werden kann.

Die Pulverschichtenpräparierungseinrichtung der Vorrichtung nach den Fig. 8a - 8c und 9 erlaubt eine zuverlässige Zuführung von Pulver zum Prozessraum, unabhängig von der Art und Fließfähigkeit des Pulvers. Ferner gewährleistet sie eine schnelle und qualitativ hochwertige Pulverschichtenpräparation auf der Bauplattform 13.

In Fig. 2a ist in einer grob schematischen Weise eine Momentaufnahme während der Bestrahlung einer zuletzt auf der Bauplattform 13 präparierten Pulverschicht 21 dargestellt. Ausgehend von einer ersten Pulverschicht, die auf einer Substratplatte 25 präpariert worden ist, hat der Bauprozess des Formkörpers 23 begonnen und ist dann Schicht für Schicht bis zu der in Fig. 2a angedeuteten Momentaufnahme fortgesetzt worden. Das verwendete Pulver ist z. B. Metallpulver oder ggf. Keramikpulver. Nach der Präparation einer jeweiligen Pulverschicht auf der Bauplattform 13 wird diese mittels eines Laserstrahls 27 ortsselektiv an den Stellen bestrahlt, an denen das Pulver zu zusammenhängend verfestigten Bereichen umgeschmolzen werden soll. Der Laserstrahl 27 tastet die aktuell zu bestrahlende Schicht 21 in gesteuerter Weise ab, wobei hierzu z. B. ein X-Y-Galvanoscanner 29 zum Einsatz kommt. Weiterhin steuert die Steuereinrichtung die Einschalt-/ Ausschaltphasen des Laserstrahls 27.

Gemäß Fig. 2a ist der Laserstrahl 27 so fokussiert, dass sein Brennpunkt 31 an der Oberfläche der Pulverschicht 21 liegt. Der Strahlauftreffpunkt 37 ist somit an dieser Stelle äußerst klein und die Energiedichte das Laserstrahls im Strahlauftreffpunkt ist sehr hoch.

Die Größe des Strahlauftreffpunktes 37 und somit dessen Energiedichte kann dadurch variiert werden, dass die in einer Zylinderführung 33 entlang der vertikalen Achse 35 gesteuert bewegbare Bauplattform 13 in ihrer Höheneinstellung variiert wird. Fig. 2b zeigt den Beispielsfall, dass die Bauplattform 13 nach der Präparierung der aktuell zu bestrahlenden Schicht 21 um ein Absenkmaß Y gegenüber dem Brennpunkt 31 des Laserstrahls 27 abgesenkt worden ist, so dass der Laserstrahl 27 am Strahlauftreffpunkt 37 auf der Oberseite der zu bestrahlenden Pulverschicht 21 wieder etwas aufgeweitet ist im Vergleich zu der Situation gemäß Fig. 2a. Der Strahlauftreffpunkt 37 auf der zu bestrahlenden Pulverschicht 21 in Fig. 2b ist somit größer geworden und hat pro Flächeneinheit eine geringere Energie als der dem Brennpunkt entsprechende Strahlauftreffpunkt 37 in Fig. 2a. Durch entsprechende Höheneinstellung der Bauplattform 13 kann somit die Größe des Strahlauftreffpunktes auf der zu bestrahlenden Pulverschicht 21 während des Bestrahlungsvorgangs variiert werden, sofern dies erwünscht ist. Andererseits ist es auch möglich, dass jeweils zu Beginn eines Schichtenbestrahlungsvorganges diese Fokaleinstellung bzw. Defokussierung durch entsprechende Höheneinstellung der Bauplattform 13 erfolgt.

Die Fig. 3a und 3b zeigen schematisch, wie nach Fertigstellung eines Formkörpers 23 eine Pulverabsaugglocke 69 über die Bauplattform 13 gestülpt ist. Die Pulverabsaugglocke 69 ist teilweise aufgebrochen dargestellt, um das Innenvolumen erkennbar zu machen. In Fig. 3a befindet sich die Bauplattform 13 noch in einem abgesenkten Zustand, in dem die zuletzt präparierte Pulverschicht 21 im Wesentlichen bündig mit der Basisebene 51 des Prozessraumbodens 11 liegt. In Fig. 3b ist die Bauplattform 13 in einem angehobenen Zustand gezeigt, wobei das darauf liegende Pulver und der aufgebaute Formkörper 23 in dem Innenvolumen der Saugglocke 69 aufgenommen sind. Das den Formkörper 23 außen umgebende überschüssige Pulver kann so effizient abgesaugt werden. Dies erfolgt über die Absaugleitung 71, die an einer Absaugpumpe angeschlossen ist. Das abgesaugte Pulver gelangt in eine Siebvorrichtung. Das gesiebte Pulver gelangt dann in einen Vorratsbehälter zur Wiederverwendung. Mit 75 ist in Fig. 3a, 3b eine schematisch angedeutete Gaszuführleitung bezeichnet, mittels welcher Gas zur Auflockerung des abzusaugenden Pulvers in die Saugglocke einblasbar ist. Die Leitungen 71, 75 können Elemente eines Schutzgaskreislaufs sein, der auch eine abgesaugtes Pulver von dem Absaugschutzgas trennende Filtereinrichtung enthält.

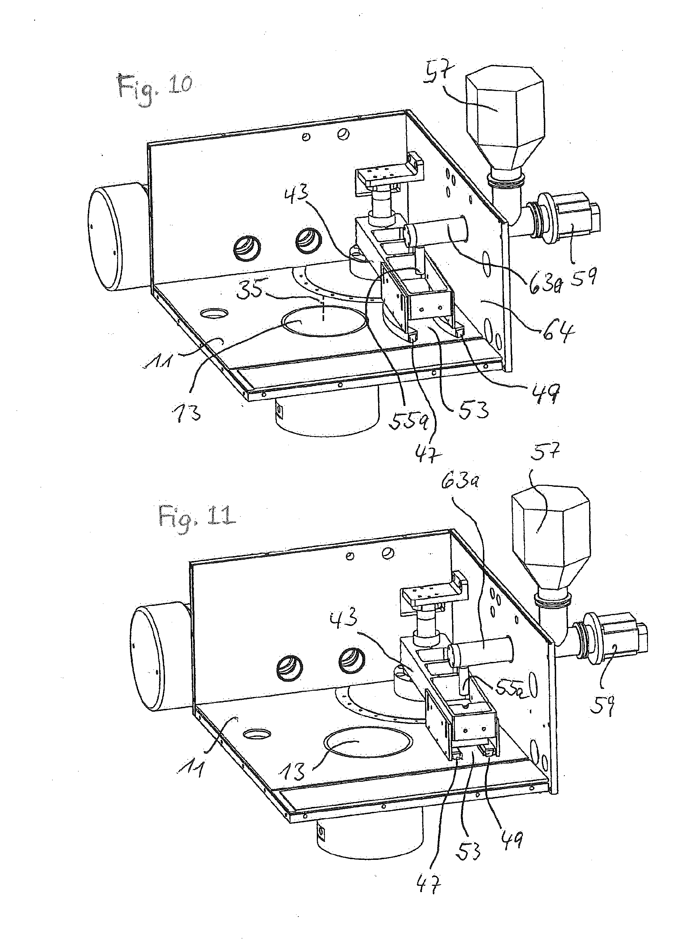

In den Fig. 10 und 11 sind zwei weitere Beispiele einer SLM-Vorrichtung in Teildarstellung gezeigt. Abweichend von den bereits beschriebenen Beispielen mündet der Pulverzuführungskanal 63a in den Beispielen der Fig. 10 und 11 nicht von unten her in den Prozessraum 9, sondern an einer Stelle oberhalb des Prozessraumbodens 11. Ein oberer Pulverzuführungskanal 63a ist abgedichtet durch eine Öffnung in der Gehäuserückwand 64 geführt. Die Pulvereinlassstelle 55a ist durch ein vertikal von dem rohrförmigen Pulverzuführungskanal 63a nach unten abstehendes Röhrchen definiert, welches von oben her in den oben offenen Zwischenraum 53 zwischen den beiden vorzugsweise gesteuert höhenverstellbaren Pulverglättungsleisten 47, 49 mündet, wenn der Glättungsschieber 43 in der in den Fig. 10 und 11 gezeigten Pulvernachfüllwartestellung ist. Nach Abgabe einer dosierten Pulvermenge in den Zwischenraum 53 wird der Glättungsschieber 43 über die Bauplattform 13 hinwegverschwenkt, um eine betreffende Pulverschicht zu präparieren, wie dies bereits unter Bezugnahme auf die vorausgegangenen Ausführungsbeispiele erläutert wurde.

Bei der Vorrichtung nach Fig. 10 sind die Pulverglättungsleisten 47, 49 in der unter Bezugnahme auf Fig. 9 bereits beschriebenen Weise gekrümmt, während die Vorrichtung nach Fig. 11 zwei geradlinige und parallel zueinander verlaufende Pulverglättungsleisten 47, 49 aufweist.

## Patentansprüche

1. Vorrichtung zum Herstellen von Formkörpern (23) durch schichtweises Aufbauen aus Werkstoffpulver durch ortsselektives Verfestigen des Pulvers zu zusammenhängenden Bereichen nach Maßgabe von Geometriebeschreibungsdaten des Formkörpers (23), umfassend
- einen Prozessraum (9) mit einem Prozessraumboden (11), der eine Basisebene (51) und eine relativ dazu mittels einer steuerbaren Antriebseinheit längs einer vertikalen Bauplattformachse (35) gesteuert höhenverstellbare Bauplattform (13) für den Formkörper (23) aufweist,
- eine Pulverschichtenpräparierungseinrichtung zum Präparieren einer jeweiligen nachfolgend ortsselektiv zu verfestigenden Pulverschicht (21) auf der Bauplattform (13),
- eine Pulververfestigungseinrichtung, die zum ortsselektiven Verfestigen von Pulver der jeweils zuletzt auf der Bauplattform (13) präparierten Pulverschicht (21) aktivierbar ist, und
- eine Pulverabsaugeinrichtung (69, 71) zum Absaugen von überschüssigem Pulver von der Bauplattform (13) nach Fertigstellen eines betreffenden Formkörpers (23),
wobei die Pulverschichtenpräparierungseinrichtung (41) eine Pulverversorgungseinrichtung (55, 57, 59, 63) zum Bereitstellen von Pulver in dem Prozessraum (9) und einen Glättungsschieber (43) mit wenigstens einer Pulverglättungsleiste (47) zum Verteilen und Glätten des von der Pulverversorgungseinrichtung im Prozessraum (9) bereitgestellten Pulvers auf der Bauplattform (13) aufweist, wobei der Glättungsschieber (43) mit seiner wenigstens einen Pulverglättungsleiste (47) zwischen zwei Umkehrstellen mit in Draufsicht dazwischenliegender Bauplattform (13) im Prozessraum (9) hin- und herbewegbar ist, um die wenigstens eine Pulverglättungsleiste (47) in einem der gewünschten Pulverschichtdicke entsprechenden Abstand zu der im jeweils vorausgegangenen Schritt auf der Bauplattform (13) ortsselektiv verfestigten Pulverschicht über die Bauplattform (13) hinwegzubewegen,
**dadurch gekennzeichnet, dass** die Pulverabsaugeinrichtung (69, 71) eine Absaugglocke (69) umfasst, die im Prozessraum (9) über die Bauplattform (13) stülpbar ist und die über Pulverabsaugleitungen (71) mit einem externen Sammelbehälter verbunden ist.

2. Vorrichtung nach Anspruch 1, wobei die Bauplattform (13) bei darübergestülpter Absaugglocke (69) zum Einbringen eines betreffenden Formkörpers (23) in die Absaugglocke (69) und zum Entfernen von überschüssigem Pulver von dem Formkörper (23) auf die Basisebene (51) des Prozessraumbodens (11) oder darüber hinaus, insbesondere während eines Pulverabsaugvorgangs, anhebbar ist.

3. Vorrichtung nach Anspruch 1 oder 2, wobei die Absaugglocke (69) manuell, insbesondere unter Verwendung eines einen Durchgriff durch eine Prozessraumgehäusewandöffnung gestattenden Dichthandschuhs oder automatisch, insbesondere mittels einer Robotereinrichtung handhabbar ist.

4. Vorrichtung nach einem der vorhergehenden Ansprüche, wobei die Pulverabsaugeinrichtung (60, 71) eine Pulverauflockerungseinrichtung zum Auflockern von abzusaugendem Pulver auf der Bauplattform (13) umfasst.

5. Vorrichtung nach Anspruch 4, wobei die Pulverauflockerungseinrichtung eine die Bauplattform (13) in Vibration versetzende Rütteleinrichtung, insbesondere Ultraschall-Rütteleinrichtung aufweist.

6. Vorrichtung nach Anspruch 4, wobei die Pulverauflockerungseinrichtung eine Gaseinlassdüse umfasst, welche an einer in den Prozessraum (9) hineinführenden Gaszuführleitung (75) vorgesehen ist.

7. Vorrichtung nach Anspruch 6, wobei die Gaseinlassdüse dazu eingerichtet ist, Gas unter Druck in die Absaugglocke (69) einzuleiten.

8. Vorrichtung nach Anspruch 6 oder 7, wobei die Pulverauflockerungseinrichtung dazu eingerichtet ist, mittels der Gaseinlassdüse ein Schutzgas, insbesondere Argon zum Auflockern des abzusaugenden Pulvers einzublasen.

9. Vorrichtung nach einem der Ansprüche 6 bis 8, wobei die Pulverabsaugeinrichtung (69, 71) und die Pulverauflockerungseinrichtung einem Gasförderkreislauf, insbesondere Schutzgaskreislauf zugeordnet sind.

10. Vorrichtung nach Anspruch 9, ferner umfassend ein Filtersystem in dem Gasförderkreislauf zum Ausfiltern von Pulver in Schutzgasatmosphäre.

11. Vorrichtung nach einem der vorhergehenden Ansprüche, wobei die Bauplattform (13) dazu eingerichtet ist, um ihre vertikale Bauplattformachse (35) drehbar zu sein.

12. Vorrichtung nach einem der vorhergehenden Ansprüche, wobei die Pulverversorgungseinrichtung (55, 57, 59, 63) einen an einem außerhalb des Prozessraumes (9) vorgesehenen Pulvervorratsbehälter (57) angeschlossenen bzw. anschließbaren Pulverzuführungskanal (63) und einen Förderer zum Fördern von Pulver in dem Pulverzuführungskanal (63), insbesondere während der Phasen, in denen die Pulververfestigungseinrichtung zur ortsselektiven Verfestigung von Pulver der jeweils zuletzt auf der Bauplattform präparierten Pulverschicht (21) aktiviert ist, aufweist,
wobei der Pulverzuführungskanal (63) an wenigstens einer zwischen der Bauplattform (13) und einer der Umkehrstellen der Pulverglättungsleiste (49) liegenden Pulvereinlassstelle (55) in den Prozessraum (9) einmündet, um Pulver unmittelbar zu dem Prozessraumboden (11) zu leiten, und dass die wenigstens eine Pulverglättungsleiste (47) bei ihrer Bewegung zwischen den Umkehrstellen (58, 60) relativ zu dem Prozessraumboden (11) gesteuert höhenverstellbar ist.
